# EUROPEAN PATENT APPLICATION

(11) **EP 2 200 316 A1**
(43) Date of publication of application: **23.06.2010**
(21) Application number: 08171550.0
(22) Date of filing: 12.12.2008
(51) Int. Cl.: H04N 7/24, H04N 5/445

(54) **A method for selecting and displaying widgets on a multimedia unit**

(71) Applicant: Nagravision S.A., 1033 Cheseaux-sur-Lausanne (CH)
(72) Inventor: Delidais, Alexandre, 1041 Naz (CH); Rapin, Gilles, 2027 Fresens (CH); Tzonis, Stelio, 1009 Pully (CH)
(74) Representative: Leman Consulting S.A.

(57) **Abstract**

The present invention relates to a method for selecting and displaying widgets on a multimedia unit comprising at least a memory unit and a display, said multimedia unit being connected to at least one server with a bidirectional link and said multimedia unit being connected to at least a broadcast content provider having a broadcast link to a plurality of multimedia units, said method comprising the steps of :
- determining a plurality of widgets that are likely to be used during a given period;
- downloading through the bidirectional link said determined widgets in the memory unit, said widgets comprising at least an identification data;
- receiving by the multimedia unit, a data stream from the broadcast provider through the broadcast link between the multimedia unit and the broadcast content provider;
- extracting from the received data stream at least one identification data of the widgets to be displayed;
- determining from the identification data contained in the data stream, which widget is to be displayed;
- retrieving said widget to be displayed;
- displaying said widget on the display.

## Description

### TECHNICAL FIELD

The invention concerns a method for selecting and displaying widgets on a multimedia unit comprising at least a memory unit and a display, said multimedia unit being connected to at least one server with a bidirectional link and said multimedia unit being connected to at least one broadcast content provider.

### BACKGROUND ART

Nowadays, the interconnection between television and Internet is more and more common. Accessing to the Internet from a television remote control is however impractical, due to the limited number of available keys. In order to facilitate the access, several approaches were used.

One of these approaches consists in displaying widgets, each widget being selectable by navigation keys (arrows) of the remote control. Such a widget comprises at least a graphic element and an application. A widget could be defined as an integrated collection of procedures, data and a graphical user interface dedicated to a single well-defined task. Selecting the graphic element through the television remote control runs the application.

These widgets are also used to propose the applications that can possibly be of interest for the majority of users. It can also propose advertising. An application forming a widget could enable displaying some specific information and/or open an Internet web page for example.

The patent application WO 2007/35514 describes such an implementation wherein widgets are displayed on a television set, these widgets being used for selecting specific applications. According to a preferred embodiment of the invention described in the cited document, the widgets are memorized in the television. This means that at least the picture and the application are downloaded from the widget provider and are stored in the television's memory prior to being used.

The widgets have a predefined function such as for example "Weather broadcast", "Sport", "Broadcast events on other channel". These widgets are always visible or available. They are not directly linked to the broadcast content or to the content the user is presently viewing and have rather a general interest. There is no interaction between the content presently viewed and the widgets displayed as these widgets are managed independently from the viewed data.

According to the invention described in WO 2007/35514, the widgets cannot be specific to an event, for example a part of a currently broadcast event. There is no link between the broadcast part and the widget part. Due to the independency between the management of the widgets and the broadcast, it is not possible to propose to the user, the most interesting widgets in accordance with the data he/she is currently viewing.

In order to overcome this problem, it could be possible to include the widgets in the broadcast data stream. It should however be noted that the format of the broadcast data stream is usually fixed and that the content providers are generally not willing to change this format in order to integrate applications such as widgets.

The problem the present invention seeks to solve is to enable the display of widgets directly related to the broadcast content, without substantially changing this broadcast stream.

### DISCLOSURE OF INVENTION

The object of the invention is to propose a method for selecting and displaying widgets on a multimedia unit comprising at least a memory unit and a display, said multimedia unit being connected to at least one server with a bidirectional link and said multimedia unit being connected to at least a broadcast content provider having a broadcast link to a plurality of multimedia units, said method comprising the steps of :
- determining a plurality of widgets that are likely to be used during a given period;
- downloading through the bidirectional link said determined widgets in the memory unit, said widgets comprising at least an identification data;
- receiving by the multimedia unit, a data stream from the broadcast provider through the link between the multimedia unit and the broadcast content provider;
- extracting from the received data stream at least one identification data of the widgets to be displayed;
- determining from the identification data contained in the data stream, which widget is to be displayed;
- retrieving said widget to be;
- displaying said widget on the display.

### BRIEF DESCRIPTION OF THE DRAWINGS

The present invention and its advantages will be better understood thanks to the enclosed detailed description of a particular embodiment and to the enclosed drawings, in which :
- Fig. 1 schematically describes the elements that are required to implement the method of the present invention;
- Fig. 2 shows a widget as stored in a multimedia unit according to an embodiment of the method of the present invention;
- Fig. 3 illustrates a broadcast data stream as used in the method of the invention; and
- Fig. 4 schematically represents the different steps of the method of the invention.

### EXEMPLARY EMBODIMENTS OF THE INVENTION

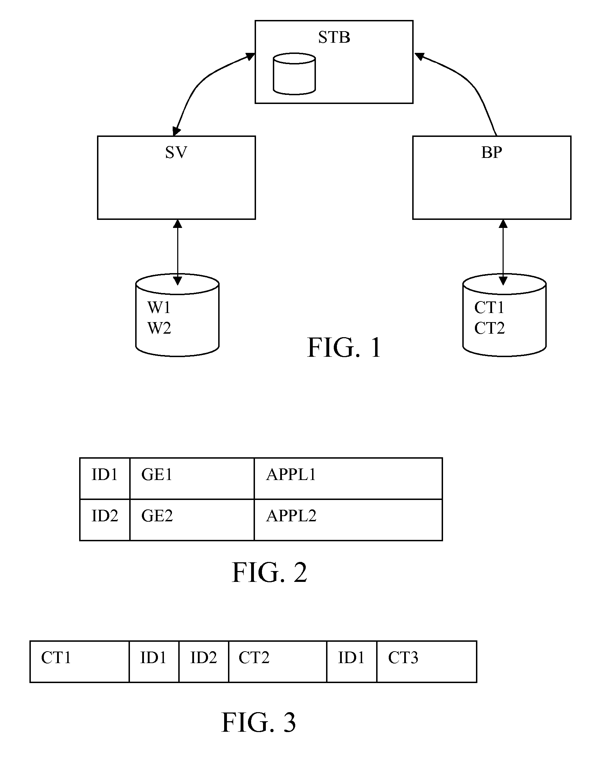

With reference to Fig. 1, the method of the invention is carried out by a multimedia unit STB such as a television set, connected to a server SV on one hand and to at least a broadcast provider BP on the other hand.

The connection between the multimedia unit STB and the server SV is bidirectional and may use the Internet. Data can be transferred from the server to the multimedia unit and vice versa. As an example, a request for a given type of widget could be sent from the multimedia unit to the server. Widgets could then be sent from the server to the multimedia unit.

The connection between the multimedia unit STB and the broadcast provider BP is generally unidirectional and of the broadcast type. This means that data such as a broadcast content CT1, CT2 can be sent to a plurality of multimedia units by the provider. This broadcast content can be sent by satellite, IP, terrestrial or by cable for example. If the connection between the multimedia unit and the broadcast provider is unidirectional, the multimedia unit cannot transfer data to the provider by broadcast. As it is well known, a "back channel" is available in some types of systems, such as in particular a telephone line. However, this would not be considered here as a bidirectional link as the communication from the multimedia unit to the provider is different from broadcast mode.

In the case where the content is broadcast by IP, said content is sent to several users at the same time. The bidirectional link to the server uses the same protocol as the broadcast, but another "part" of the available link.

A widget W1, W2 as used in the present invention is formed of an identifier ID1, ID2 that enables uniquely identifying the widget. It also comprises a graphic element GE that is displayed to the user when a widget is proposed on the user unit. It further comprises an application that manages the widget as it appears on the user unit screen. The graphic element GE may be a single picture, text, several pictures or a short movie that displays information for the user for example.

Such a widget could display the newest products of a company or promotional offers of that company.

The method of the present invention comprises two phases, namely a phase of acquisition of the widgets and a phase of using these widgets. More specifically, the first phase comprises the steps of selecting the widgets that could be of interest for the user and the second phase comprises the steps which lead to the actual display of the widgets and possibly to the activation of the widgets by the user.

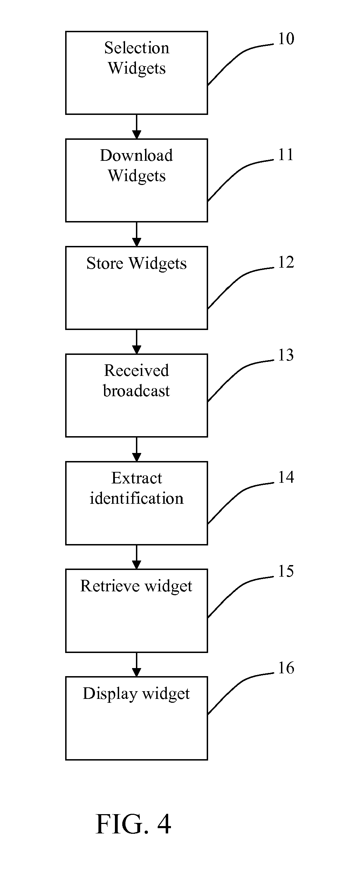

In the first phase, a connection between the multimedia unit and the server is made. A selection of widgets W1, W2 contained in the server's database is realized. This selection is referenced by number 10 on Fig. 4 and can be based on several criteria. A first one could be the date. For example, the selected widgets could be all or a part of the widgets that could be used in the next two days. Another criterion could be related to the channels. As an example, it is possible to select all or a part of the widgets that are linked to the channels a specific multimedia unit STB is allowed to access, or only the widgets of the most used channels. The downloaded widgets could also be widgets linked to a specific event.

In order to enable this selection, the widgets are indexed in the server's database. This indexation can for example comprise a "begin date" corresponding to the date from which the widget should be available, and an "end of validity date" corresponding to the latest date at which the widget should be used. Thus, when the selection of the widgets is made, it is possible to sort the widgets by "begin date" and to download all the widgets that have a begin date corresponding for example to the next two days.

According to a preferred embodiment, the selection is performed by the server on the basis of data that can be received from the multimedia unit. This selection could however also be made without data from the multimedia unit. As an example, all the widgets for the next two days are downloaded without taking into account, the channels the multimedia unit can access.

On the contrary, the selection of the widgets could also be initialized by the multimedia unit itself. In this case, the multimedia unit sends a request to the server indicating the widgets that are to be downloaded. These indications can contain a category (Sport, recent movies,...), a list of accessible channels, a list of most frequently viewed channels, etc.

Once the selection is made, the widgets are downloaded, which corresponds to step 11 of Fig. 4. These widgets are sent from the server to the multimedia unit through the bidirectional link and are stored in the memory of the multimedia unit. This corresponds to step 12.

As already mentioned, the widget can comprise an end of validity date. This date is preferably also sent with the widget and stored in the multimedia unit's memory. This end date enables the management of the widgets in the memory and prevents this memory to be filled with out of date widgets.

The second phase of the invention concerns the use of the stored widgets i.e. the display of these widgets. According to this phase, the multimedia unit receives a data stream sent by a broadcast content provider. This corresponds to step 13. This stream, further to the conventional content, also comprises at least one widget identification data ID. This identification data is of very small size, so that it can be easily introduced by the provider without impairing the quantity of data that can be broadcast. This stream is illustrated by Fig. 3. This identification data corresponds to one or several specific widgets that should be displayed together with a specific content. As an example, shown on Fig. 3, the widgets identified by ID1 and ID2 should be displayed together with content CT1, the widget ID1 should be displayed with content CT2 and so on. According to this feature, the content provider can use a conventional broadcast format. It should be noted that the same widget can be used several time during the day for example associated with a particular advertisement.

A content could be associated to one or several widgets and one widget could be associated to one or several contents.

When the multimedia unit receives a broadcast data stream, it extracts, in a step 14 of Fig. 4, the identification data ID contained in this stream. This identification data is compared to the identification data stored in the multimedia unit and is used to retrieve the widgets stored in the memory of the multimedia unit and to display them. The retrieval of the widget is referenced by 15 in Fig. 4 and the step of displaying the widget is referenced by 16. According to a variant, if the widget is not available in the memory of the multimedia unit, it may be retrieved on the Internet, through the bidirectional link between the server and the multimedia unit.

When a widget is displayed on the screen of a multimedia unit, the user can usually choose to discard it, or to install it on the multimedia unit to access to further information. In case it is discarded, it is removed from the multimedia unit screen. In case it is installed on the multimedia unit, which is generally done by an activation of the widget by the user, an application corresponding to this widget is downloaded from the server SV to the multimedia unit STB. This application is then run into the multimedia unit. It is also possible to use the multimedia unit as a terminal and to run the application in the server, without downloading it into the multimedia unit.

The widget used in the present invention could be considered as a teaser proposing the user to install an application that will enable this user to access to further information.

According to the present invention, the displayed widgets can be made very specific to a content or even to a part of the content, without modifying in a substantial way, the data steam that is broadcast by a content provider. Moreover, as most of the widgets are stored in the multimedia unit, the display of the widgets is very fast.

The downloading of the application of a selected widget can be slower. However, this is not a drawback as the user is willing to wait a few tenths of seconds to obtain the requested information.

According to a particular aspect of the invention, the widgets are managed in order to avoid the congestion of the multimedia unit's memory with widgets that will not be used anymore. A particular way for managing these widgets consists of associating them with an "end of validity" date as mentioned above. Once this date is passed, the widget is automatically deleted from the memory.

Another way could consist of associating the widget to a number of times the widget is displayed. When this number of displays is reached, the widget is deleted. Another way could memorize the last date at which the widget was displayed. If a widget was not used during a predetermined time, it is deleted. It is also possible to send an erase command in the broadcast data stream, to delete the corresponding widgets.

Still another way is to store widgets until the multimedia unit's memory is full. When a new widget must be downloaded, the oldest one is deleted in the memory in order to free space.

According to a particular aspect of the invention, the multimedia unit can memorize the most frequently used widgets and can download or display in priority, the widgets of a similar category.

## Claims

1. A method for selecting and displaying widgets on a multimedia unit comprising at least a memory unit and a display, said multimedia unit being connected to at least one server with a bidirectional link and said multimedia unit being connected to at least a broadcast content provider having a broadcast link to a plurality of multimedia units, said method comprising the steps of :
- determining a plurality of widgets that are likely to be used during a given period;
- downloading through the bidirectional link said determined widgets in the memory unit, said widgets comprising at least an identification data;
- receiving by the multimedia unit, a data stream from the broadcast provider through the broadcast link between the multimedia unit and the broadcast content provider;
- extracting from the received data stream at least one identification data of the widgets to be displayed;
- determining from the identification data contained in the data stream, which widget is to be displayed;
- retrieving said widget to be displayed;
- displaying said widget on the display.

2. Method according to claim 1, **characterized in that** the step of retrieving said widget to be displayed comprises a step of extracting said widget from the memory unit of the multimedia unit.

3. Method according to claim 1, **characterized in that** the step of retrieving said widget to be displayed comprises a step of downloading said widget through the bidirectional link.

4. Method according to claim 1, **characterized in that** it comprises management means of the widgets in the memory of the multimedia unit.

5. Method according to claim 4, **characterized in that** the management means comprises at least one of an end of validity date, a number of displays and an erase command.
